# EUROPÄISCHE PATENTSCHRIFT

(11) **EP 4 153 426 B1**
(45) Veröffentlichungstag und Bekanntmachung des Hinweises auf die Patenterteilung: **09.12.2026**
(21) Anmeldenummer: 21725114.9
(22) Anmeldetag: 10.05.2021
(51) Int. Cl.: B32B 37/12, B29C 65/48, C03C 27/00, B32B 38/00, B41M 1/42, C03C 17/00, F16B 11/00

(54) **VERFAHREN ZUM AUFBRINGEN EINER GRUNDIERUNG AUF EINEM BAUTEIL**
METHOD FOR APPLYING A PRIMER TO A SUBSTRATE
PROCÉDÉ D'APPLICATION D'UN APPRÊT SUR UN SUBSTRAT

(30) Priorität: 18.05.2020 EP 20175122
(43) Veröffentlichungstag der Anmeldung: 29.03.2023
(73) Patentinhaber: Saint-Gobain Sekurit France, 60150 Thourotte (FR)
(72) Erfinder: TRINH, Cindy, 93600 Aulnay-sous-Bois (FR); OLTROGGE, Jan-Uwe, 52066 Aachen (DE); MOTZHEIM, Ralf, 52223 Stolberg (DE)
(74) Vertreter: Gebauer, Dieter Edmund
(86) Internationale Anmeldenummer: PCT/EP2021/062257
(87) Internationale Veröffentlichungsnummer: WO 2021/233703

(56) Entgegenhaltungen:
- WO-A1-2016/096652
- WO-A2-2007/079160
- FR-A1- 2 921 653
- US-B2- 9 132 685
- ANONYMOUS: "Primer for UV printing on glass | Boston Industrial Solutions, Inc.", 2 December 2024 (2024-12-02), XP093229707, Retrieved from the Internet <URL:https://bostonindustrialsolutions.com/blog/printing-on-glass-tips/> [retrieved on 20241202]
- ANONYMOUS: "Inkjet Primers for Industrial Inkjet Printing | Inkcups", 2 December 2024 (2024-12-02), XP093229711, Retrieved from the Internet <URL:https://www.inkcups.com/inkjet-primers/> [retrieved on 20241202]
- ANONYMOUS: "IRIS Glass Primer - Special primer for printing flat glass with UV inkjet inks", 2 December 2024 (2024-12-02), XP093229710, Retrieved from the Internet <URL:http://www.glasprimer.at/en> [retrieved on 20241202]
- ILSE JOOSEN: "Ten tips for printing on glass with a wide-format UV LED inkjet printer", 2 December 2024 (2024-12-02), XP093229708, Retrieved from the Internet <URL:https://www.agfa.com/printing/know-how/printing-on-glass/> [retrieved on 20241202]

## Beschreibung

Die Erfindung betrifft ein Verfahren zum Herstellen einer Verglasung mit einem Bauteil.

WO 2016/096652 A1 offenbart ein Verfahren zur Herstellung laminierter Glasartikel mit einem tintenstrahlgedruckten Bild zu dekorativen und/oder informativen Zwecken. In der WO 2007/079160 A2 ist eine dekorierte Polymerfolie und ein Verfahren zur deren Herstellung offenbart.

Nach dem Stand der Technik ist es zudem bekannt, eine Grundierung für Anbauteile auf einer Scheibe oder einem Anbauteil mittels Tampondruck aufzutragen. Ein solches Verfahren ist beispielsweise aus der FR 2 921 652 A1 oder der FR 2 921 653 A1 bekannt. Bei dem bekannten Verfahren wird ein Filz oder ein Tampon, insbesondere aus Silikon, in die Grundierungsflüssigkeit eingetaucht und dann mit dem Filz oder Silikon entweder durch eine Person oder durch einen Roboter die Grundierungsflüssigkeit auf der zu grundierenden Oberfläche aufgetragen.

Nachteil des bekannten Verfahrens ist, dass bei einem Auftrag mittels eines Tampons, insbesondere Silikontampons, ein solcher Tampon materialbedingt nicht mit allen Substraten kompatibel ist. So ist vor allem der Silikonwerkstoff im Hinblick auf seine antiadhäsiven Eigenschaften als kritisch für einen Haftgrundauftrag zu bewerten. Bei einem Tampondruck werden Sets aus Tampon, Klischee und Farbtopf verwendet, welche nur für ein oder wenige Druckbilder und nur für einen begrenzten Zeitraum genutzt werden können. Gerade bei der Wiederverwendung der Tampons besteht ein erhöhtes Risiko, dass diese verschmutzt oder beschädigt sind. Tampons, welche nicht mehr wiederverwendet werden, müssen entsorgt und ersetzt werden. Somit ist ein großer Vorrat an Drucksets und vor allem Ersatztampons notwendig. Weiterhin ist die Abgabe von Flüssigkeit durch den Tampon gewissen Schwankungen unterworfen. Zudem verursacht die Verdunstung des Mediums in der Druckmaschine die Notwendigkeit einer regelmäßigen, teilweise häufigen Reinigung aller Bauteile mit Medienkontakt. Nachteilig an einem manuellen Auftrag durch einen Operator sind systembedingte Schwankungen in der Auftragsmenge und in dem Auftragsmuster. Weiter nachteilig ist die Exposition des Operators mit lösemittelhaltiger Grundierflüssigkeit. Der für den Auftrag verwendete Filz ist in ständigem Kontakt mit den zu behandelnden Bauteiloberflächen, verschmutzt somit und muss regelmäßig ersetzt werden. Wird der Filz dagegen nicht ersetzt, kann es zu Qualitätsproblemen bis hin zum Ausfall der Klebung führen.

Aufgabe der Erfindung ist es, ein Verfahren anzugeben, welches ein verbessertes Aufbringen einer Grundierung erlaubt. Diese soll insbesondere hinsichtlich der Reproduzierbarkeit einer hohen Auftragsqualität, Produktivität, Nutzerfreundlichkeit und Umweltverträglichkeit verbessert sein.

Die Erfindung betrifft gemäß Patentanspruch 1 ein Verfahren zum Herstellen einer Verglasung mit einem Bauteil, umfassend:
a) Bereitstellen einer Scheibe, welche eine Außen- oder Innenscheibe einer Verbundverglasung ist, und eines Bauteils,
b) Aufbringen einer Grundierung auf dem Bauteil,
c) Aufbringen einer Grundierung auf der Scheibe,
d) Aufbringen eines Klebstoffes auf die zuvor aufgetragene Grundierung auf dem Bauteil oder der Scheibe,
e) Verbinden von Scheibe und Bauteil,
wobei in Schritt b) zunächst ein Auftragsmuster, in dem die Grundierung auf das Bauteil aufgebracht wird, bereitgestellt wird und dann die Grundierung mittels einer Druckvorrichtung kontaktlos auf das Bauteil aufgebracht wird, wobei in Schritt c) zunächst ein Auftragsmuster, in dem die Grundierung auf die Scheibe aufgebracht wird, bereitgestellt wird und dann die Grundierung mittels einer Druckvorrichtung kontaktlos auf der Scheibe aufgebracht wird, wobei das Auftragsmuster, in dem die Grundierung auf das Bauteil aufgebracht wird, in Form einer Graphikdatei bereitgestellt wird, wobei das Auftragsmuster in dem die Grundierung auf die Scheibe aufgebracht wird, in Form einer Graphikdatei bereitgestellt wird, und wobei das Auftragsmuster, in dem die Grundierung auf das Bauteil aufgebracht wird, und das Auftragsmuster in dem die Grundierung auf die Scheibe aufgebracht wird, gleich sind.

Das Verfahren zum Aufbringen einer Grundierung auf dem Bauteil umfasst
a) Bereitstellen eines Bauteils,
b) Bereitstellen eines Musters, in dem die Grundierung aufgebracht werden soll,
c) Kontaktloses Aufbringen der Grundierung mittels einer Druckvorrichtung auf dem Bauteil.

Hierbei wird ein Auftragsmuster in Form einer Graphikdatei bereitgestellt, sodass der Auftrag immer in den dafür vorgesehenen Bereichen auf dem Bauteil erfolgt. Somit kann z.B. immer ein ausreichender Rand zu Außenkanten und/oder Funktionsteilen eingehalten werden. Durch die Nutzung eines Druckers, der kontaktlos arbeitet, kann auf Filze oder Tampons verzichtet werden. Somit wird sowohl die anfallende Müllmenge, insbesondere Sondermüllmenge, reduziert als auch die Fehleranfälligkeit auf Grund nicht getauschter, verschmutzter Filze oder verschmutzter oder beschädigter Tampons verringert. Die Grundierung, auch Primer, wird aus einer Grundierflüssigkeit, insbesondere Dispersion, welche Wasser oder Lösemittel basiert sein kann, aufgebracht. Die aufgebrachte Grundierung dient insbesondere als Haftvermittler. Ein solches Verfahren kann insbesondere in eine vollautomatisierte Produktionsstraße integriert werden, da u.a. Wechsel von Filz oder Tampon entfallen.

Dadurch, dass die Auftragsmuster in Form von Graphikdateien bereitgestellt werden können, ist keine Druckplatte erforderlich, was zu einer Kostenreduktion führt und einen einfacheren Wechsel der Auftragsmuster ermöglicht.

Auch lässt sich bei dem erfindungsgemäßen Verfahren die aufzutragende Grundierung einfach wechseln.

Das kontaktlose Aufbringen erfolgt zweckmäßigerweise mittels eines gepulsten Druckers, insbesondere eines Druckers mit einer Frequenz größer 800 Hz. Durch einen gepulsten Drucker können lokal sehr kleine Mengen der Grundierung aufgebracht werden. Damit wird das Muster ortsgetreuer und präziser aufgebracht, was insbesondere bei geringer Viskosität der Grundierflüssigkeit und/oder einer hohen Flüchtigkeit des Lösungsmittels der Grundierflüssigkeit notwendig ist.

Zweckmäßigerweise erfolgt das kontaktlose Aufbringen mittels eines Digitaldruckers oder Sprayprinters. Unter Digitaldrucker sind auch sogenannte Digital Printer, Inkjet Printer, Spray Printer oder Ultrasonic Printer zu verstehen.

In einer Ausgestaltung ist das Bauteil ein Halteelement für ein Anbauteil an einer Scheibe oder ein Hilfsmittel für den Verbau einer Scheibe in das Fahrzeug. Unter einem Hilfsmittel für den Verbau einer Scheibe ist z.B. eine Hebeschiene für bewegliche Seitenscheiben oder Positionierpins oder Haltepins zu verstehen.

Die Grundierung enthält Partikel, insbesondere Partikel mit einer Größe von 10 bis 20 µm (Mikrometer). Somit enthält die Grundierflüssigkeit als Dispersion Partikel, insbesondere Partikel mit einer Größe von 10 bis 20 µm. Die Partikel können als einzelne Partikel oder in Agglomeraten vorliegen.

Zweckmäßigerweise ist die Grundierung Lösungsmittel basiert. Alternativ kann die Grundierung allerdings auch wasserbasiert sein.

Die Erfindung betrifft demnach ein Verfahren zum Herstellen einer Verglasung mit einem Bauteil, umfassend:
a) Bereitstellen einer Scheibe und eines Bauteils,
b) Aufbringen einer Grundierung auf dem Bauteil nach dem oben beschriebenen Verfahren,
c) Aufbringen einer Grundierung auf der Scheibe,
d) Aufbringen eines Klebstoffes auf die zuvor aufgetragene Grundierung auf dem Bauteil oder der Scheibe,
e) Verbinden von Scheibe und Bauteil.

Erfindungsgemäß wird in Schritt c) zunächst ein Muster, in dem die Grundierung auf der Scheibe aufgebracht wird, bereitgestellt und dann die Grundierung mittels einer Druckvorrichtung kontaktlos auf der Scheibe aufgebracht.

Das Auftragsmuster wird in Form einer Graphikdatei bereitgestellt, sodass der Auftrag immer in den dafür vorgesehenen Bereichen auf der Scheibe erfolgt. Somit kann z.B. immer ein ausreichender Rand zu Außenkanten und/oder Funktionsteilen eingehalten werden.

Erfindungsgemäß wird für den Auftrag der Grundierung auf der Scheibe dasselbe Auftragsmuster bereitgestellt wie für den Auftrag der Grundierung auf dem Bauteil.

Die Scheibe ist eine Außen- oder Innenscheibe einer Verbundverglasung. Es kann sich insbesondere um eine Innenscheibe einer Fahrzeugverglasung, vorzugsweise einer Heckscheibe oder Windschutzscheibe handeln.

Gezeigt, aber in den Patentansprüchen nicht beansprucht ist, ein System, welches umfasst:
eine Zuführung für Bauteile,
einen Drucker mit einem Druckerkopf und einer Auflage zur Anordnung eines der Bauteile unter dem Druckerkopf und
eine Ablage zur Ablage der mit der Grundierung versehenen Bauteile,
wobei der Druckerkopf eine Grundierflüssigkeitszufuhr und eine Düse zum kontaktlosen Aufbringen der Grundierflüssigkeit auf dem Bauteil aufweist.

Es versteht sich, dass die Bauteile einzeln unter dem Druckerkopf angeordnet werden. Sind mehrere Bauteile mit einer Grundierung zu versehen, so werden diese nacheinander unter dem Druckerkopf angeordnet und nacheinander auf der Ablage für die mit Grundierung versehenden Bauteile abgelegt.

Zweckmäßigerweise umfasst das System eine Einhausung zumindest im Bereich von Auflage und Düse. Eine solche Einhausung dient dem Zweck den Austritt von abdampfendem Lösungsmittel in die Umwelt zu verringern und somit der Sicherheit von Bedienpersonal.

Die Zuführung und/oder Ablage erfolgt wahlweise manuell oder automatisiert, insbesondere mittels Fließbands und/oder Roboter. Unter einem Roboter kann beispielsweise ein System mit einem Arm mit drei oder mehr Bewegungsrichtungen oder ein Portalsystem verstanden werden. Ein solches System kann online in einer Produktionsstraße integriert sein oder offline angeordnet sein. In einer Offline-Ausführung umfasst die Zuführung und die Ablage zweckmäßigerweise je einen (Roll-) Container für die zu grundierenden Bauteile oder die grundierten Bauteile.

In einer Ausgestaltung ist entweder der Druckerkopf ortsfest und die Auflage zur Anordnung des Bauteils ist beweglich, insbesondere mittels eines in x-y-z-Richtung beweglichen Systems, oder der Druckerkopf ist beweglich, insbesondere mittels eines in x-y-z-Richtung beweglichen weiteren Systems, und die Auflage ist ortsfest. Eine Kombination des beweglichen Systems und des weiteren beweglichen Systems ist möglich, so dass sowohl Druckerkopf als auch Auflage positionierbar sind.

In einer Ausführungsform weist das System zusätzlich eine Zuführung für Scheiben, eine Auflage zur Anordnung einer der Scheiben unter dem Druckerkopf und eine Ablage zur Ablage der mit der Grundierung versehenen Scheiben auf.

Es versteht sich, dass die Scheiben einzeln unter dem Druckerkopf angeordnet werden. Sind mehrere Scheiben mit einer Grundierung zu versehen, so werden diese nacheinander unter dem Druckerkopf angeordnet und nacheinander auf der Ablage für die mit Grundierung versehenden Scheiben abgelegt.

Das System kann zusätzlich ein Kamerasystem zur Identifikation des Bauteils und des dafür benötigten Musters umfassen.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert. Es zeigen jeweils in einer Prinzipskizze:
- Fig. 1: Auftrag der Grundierung mittels Drucker,
- Fig. 2: Bauteil mit aufgetragener Grundierung,
- Fig. 3: Ablauf eines Verfahrens zum Aufbringen einer Grundierung,
- Fig. 4: Ablauf eines erfindungsgemäßen Verfahrens zum Herstellen einer Verglasung mit einem Bauteil und
- Fig. 5: Scheibe.

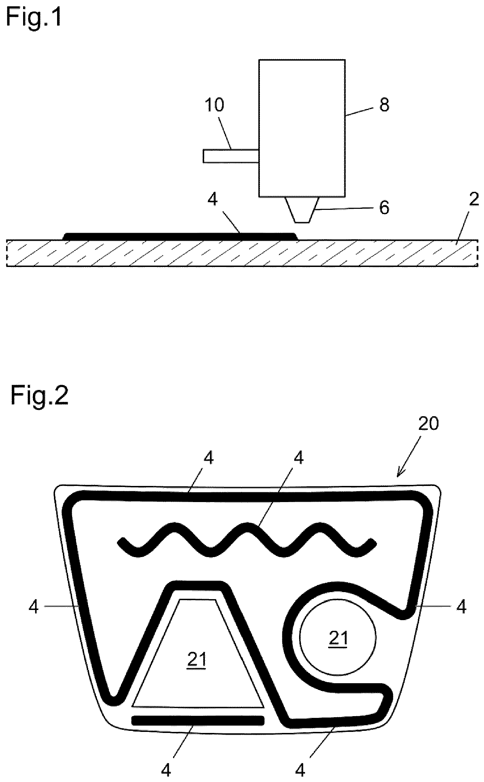

Fig. 1 zeigt schematisch ein Substrat 2. Das Substrat 2 kann ein Bauteil 20 bzw. dessen Oberfläche oder eine Scheibe 30 sein. Auf das Substrat 2 ist bereits teilweise eine Grundierung 4 aufgetragen. Zum Auftragen der Grundierung 4 wird ein Drucker mit einem Druckerkopf 8 verwendet. Der Druckerkopf 8 umfasst eine Düse 6, mit der eine Grundierflüssigkeit auf das Substrat 2 gespritzt oder getropft wird. Zum Zuführen der Grundierflüssigkeit ist eine Grundierflüssigkeitszufuhr 10 am Druckerkopf 8 vorgesehen.

Fig. 2 zeigt ein Bauteil 20. Das Bauteil 20 kann z.B. eine Halterung für eine Kamera sein, welche auf eine Windschutzscheibe geklebt werden soll. Das Bauteil 20 kann wie in diesem Beispiel gezeigt ein oder mehrere Durchlöcher 21 umfassen. Entlang einer durch ein Muster vorgegebenen Linie ist eine Grundierung 4 mittels des erfindungsgemäßen Verfahrens aufgebracht worden.

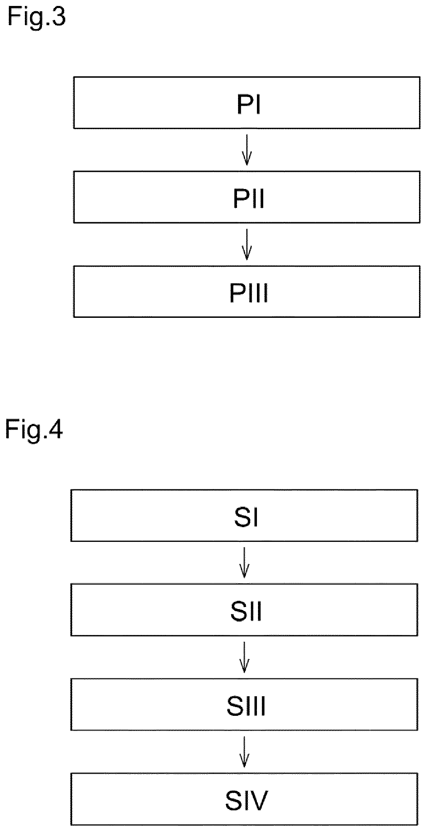

Fig. 3 zeigt den Ablauf eines Verfahrens zum Aufbringen einer Grundierung 4 auf einem Bauteil 20.

In Schritt PI wird ein Bauteil 20 bereitgestellt. Im nachfolgenden Schritt PII wird ein Muster bereitgestellt, in dem die Grundierung 4 aufgebracht werden soll. Schritt PIII umfasst kontaktloses Aufbringen der Grundierung 4 mittels einer Druckvorrichtung auf dem Bauteil 20. Dabei wird insbesondere eine Digitaldrucktechnik oder ein Sprayprinter genutzt. Mit der vorgenannten Technik wird insbesondere als Grundierflüssigkeit eine Dispersion mit Partikeln, beispielsweise mit einer Partikelgröße von 10 bis 20 µm aufgebracht.

Fig. 4 zeigt den Ablauf eines erfindungsgemäßen Verfahrens zum Herstellen einer Verglasung mit einem Bauteil.

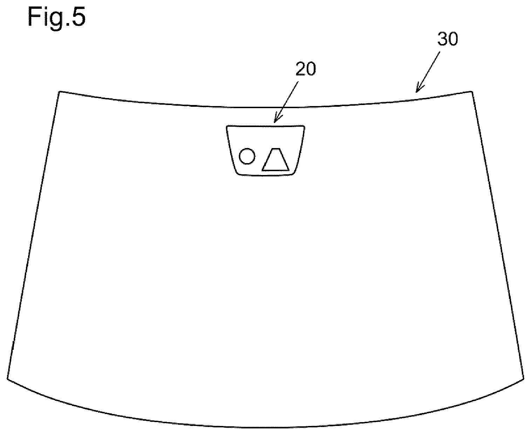

In Schritt SI wird eine Scheibe 30 und ein Anbauteil als Bauteil 20 bereitgestellt. Nachfolgend wird in Schritt SII eine Grundierung auf dem Bauteil 20 mit den Schritten PI bis PIII aufgetragen. Im Schritt SIII wird eine Grundierung auf die Scheibe 30 beispielsweise mittels der bekannten Verfahren Filzauftrag oder Tampondruck aufgebracht. Alternativ kann in Schritt SIII auch zunächst ein Muster, in dem die Grundierung 4 auf die Scheibe 30 aufgebracht wird, bereitgestellt werden und dann die Grundierung 4 mittels einer Druckvorrichtung kontaktlos auf der Scheibe 30 aufgebracht werden. Anschließend wird ein Klebstoff aufgetragen, mit dem Scheibe 30 und Bauteil 20 in Schritt SIV miteinander verbunden werden. Eine entsprechend hergestellte Scheibe 30 mit einem Bauteil 20 ist in Fig. 5 dargestellt, in der beispielhaft eine Windschutzscheibe als Scheibe 30 mit einer Halterung als Bauteil 20 dargestellt ist.

### Bezugszeichenliste

- 2: Substrat
- 4: Grundierung
- 6: Düse
- 8: Druckerkopf
- 10: Grundierflüssigkeitszufuhr
- 20: Bauteil
- 21: Durchloch
- 30: Scheibe

## Patentansprüche

1. Verfahren zum Herstellen einer Verglasung mit einem Bauteil (20), umfassend:
a) Bereitstellen einer Scheibe (30), welche eine Außen- oder Innenscheibe einer Verbundverglasung ist, und eines Bauteils (20),
b) Aufbringen einer Grundierung (4) auf dem Bauteil (20),
c) Aufbringen einer Grundierung (4) auf der Scheibe (30),
d) Aufbringen eines Klebstoffes auf die zuvor aufgetragene Grundierung (4) auf dem Bauteil (20) oder der Scheibe (30),
e) Verbinden von Scheibe (30) und Bauteil (20),
wobei in Schritt b) zunächst ein Auftragsmuster, in dem die Grundierung (4) auf das Bauteil (20) aufgebracht wird, bereitgestellt wird und dann die Grundierung (4) mittels einer Druckvorrichtung kontaktlos auf das Bauteil (20) aufgebracht wird, wobei in Schritt c) zunächst ein Auftragsmuster, in dem die Grundierung (4) auf die Scheibe (30) aufgebracht wird, bereitgestellt wird und dann die Grundierung (4) mittels einer Druckvorrichtung kontaktlos auf der Scheibe (30) aufgebracht wird, wobei das Auftragsmuster, in dem die Grundierung (4) auf das Bauteil (20) aufgebracht wird, in Form einer Graphikdatei bereitgestellt wird, wobei das Auftragsmuster in dem die Grundierung (4) auf die Scheibe (30) aufgebracht wird, in Form einer Graphikdatei bereitgestellt wird, und wobei das Auftragsmuster, in dem die Grundierung (4) auf das Bauteil (20) aufgebracht wird, und das Auftragsmuster in dem die Grundierung (4) auf die Scheibe (30) aufgebracht wird, gleich sind.

2. Verfahren nach Anspruch 1, bei welchem das kontaktlose Aufbringen der Grundierung (4) mittels eines gepulsten Druckers, insbesondere eines Druckers mit einer Frequenz größer 800 Hz, erfolgt.

3. Verfahren nach einem der Ansprüche 1 oder 2, bei welchem das kontaktlose Aufbringen der Grundierung (4) mittels eines Digitaldruckers oder Sprayprinters erfolgt.

4. Verfahren nach einem der Ansprüche 1 bis 3, bei welchem das Bauteil (20) ein Halteelement für ein Anbauteil an der Scheibe (30) oder ein Hilfsmittel für den Verbau der Scheibe (30) in ein Fahrzeug ist.

5. Verfahren nach einem der Ansprüche 1 bis 4, bei welchem die Grundierung (4) Partikel, insbesondere Partikel mit einer Größe von 10 bis 20 µm, umfasst.

6. Verfahren nach einem der Ansprüche 1 bis 5, bei welchem die Grundierung (4) Lösungsmittel- oder Wasser-basiert ist.

## Claims

1. A method for producing a glazing with a component (20), comprising:
a) providing a pane (30), which is an outer pane or an inner pane of a laminated glazing, and a component (20),
b) applying a primer (4) to the component (20),
c) applying a primer (4) to the pane (30),
d) applying an adhesive to the previously applied primer (4) on the component (20) or the pane (30),
e) joining the pane (30) and the component (20),
wherein, in step b), an application pattern according to which the primer (4) is applied to the component (20) is first provided, and the primer (4) is then applied to the component (20) in a contactless manner by means of a printing device, wherein, in step c), an application pattern according to which the primer (4) is applied to the pane (30) is first provided, and the primer (4) is then applied to the pane (30) in a contactless manner by means of a printing device, wherein the application pattern according to which the primer (4) is applied to the component (20) is provided in the form of a graphics file, wherein the application pattern according to which the primer (4) is applied to the pane (30) is provided in the form of a graphics file, and wherein the application pattern according to which the primer (4) is applied to the component (20) and the application pattern according to which the primer (4) is applied to the pane (30) are the same.

2. The method according to claim 1, wherein the contactless application of the primer (4) is carried out by means of a pulsed printer, in particular a printer operating at a frequency greater than 800 Hz.

3. The method according to claim 1 or 2, wherein the contactless application of the primer (4) is carried out by means of a digital printer or a spray printer.

4. The method according to any one of claims 1 to 3, wherein the component (20) is a holding element for an add-on part on the pane (30) or an aid for installing the pane (30) in a vehicle.

5. The method according to any one of claims 1 to 4, wherein the primer (4) comprises particles, in particular particles having a size of 10 to 20 µm.

6. The method according to any one of claims 1 to 5, wherein the primer (4) is solvent-based or water-based.

## Revendications

1. Procédé de fabrication d'un vitrage avec un composant (20), comprenant:
a) la fourniture d'une vitre (30), qui est une vitre extérieure ou une vitre intérieure d'un vitrage feuilleté, et d'un composant (20),
b) l'application d'un apprêt (4) sur le composant (20),
c) l'application d'un apprêt (4) sur la vitre (30),
d) l'application d'un adhésif sur l'apprêt (4) préalablement appliqué sur le composant (20) ou sur la vitre (30),
e) l'assemblage de la vitre (30) et du composant (20),
dans lequel, à l'étape b), un motif d'application selon lequel l'apprêt (4) est appliqué sur le composant (20) est d'abord fourni, puis l'apprêt (4) est appliqué sans contact sur le composant (20) au moyen d'un dispositif d'impression, dans lequel, à l'étape c), un motif d'application selon lequel l'apprêt (4) est appliqué sur la vitre (30) est d'abord fourni, puis l'apprêt (4) est appliqué sans contact sur la vitre (30) au moyen d'un dispositif d'impression, dans lequel le motif d'application selon lequel l'apprêt (4) est appliqué sur le composant (20) est fourni sous la forme d'un fichier graphique, dans lequel le motif d'application selon lequel l'apprêt (4) est appliqué sur la vitre (30) est fourni sous la forme d'un fichier graphique, et dans lequel le motif d'application selon lequel l'apprêt (4) est appliqué sur le composant (20) et le motif d'application selon lequel l'apprêt (4) est appliqué sur la vitre (30) sont identiques.

2. Procédé selon la revendication 1, dans lequel l'application sans contact de l'apprêt (4) est effectuée au moyen d'une imprimante pulsée, notamment d'une imprimante fonctionnant à une fréquence supérieure à 800 Hz.

3. Procédé selon la revendication 1 ou 2, dans lequel l'application sans contact de l'apprêt (4) est effectuée au moyen d'une imprimante numérique ou d'une imprimante par pulvérisation.

4. Procédé selon l'une quelconque des revendications 1 à 3, dans lequel le composant (20) est un élément de maintien pour un élément rapporté sur la vitre (30) ou un moyen auxiliaire pour le montage de la vitre (30) dans un véhicule.

5. Procédé selon l'une quelconque des revendications 1 à 4, dans lequel l'apprêt (4) comprend des particules, notamment des particules ayant une taille de 10 à 20 µm.

6. Procédé selon l'une quelconque des revendications 1 à 5, dans lequel l'apprêt (4) est à base de solvant ou à base d'eau.
